Europäisches Patentamt

**European Patent Office**

**Office européen des brevets**

(19)

(11) Publication number: **0 121 346**
**A1**

(12) **EUROPEAN PATENT APPLICATION**

(21) Application number: **84301415.0**

(22) Date of filing: **02.03.84**

(51) Int. Cl.³: **C 03 B 9/38**
**C 03 B 9/40, C 03 B 40/02**

(30) Priority: **04.03.83 US 472314**

(43) Date of publication of application:
**10.10.84 Bulletin 84/41**

(84) Designated Contracting States:
**DE FR GB IT**

(71) Applicant: **EMHART INDUSTRIES, INC.**
**426 Colt Highway**
**Farmington Connecticut 06032(US)**

(72) Inventor: **Letellier, Richard Alan**
**168 Prospect Hill Road**
**East Windsor CT 06088(US)**

(72) Inventor: **Larson, Carl Victor**
**3 Hartland Road**
**Simsbury CT 06070(US)**

(74) Representative: **Drury, Peter Lawrence et al,**
**P.O. Box No. 88 Belgrave Road**
**Leicester LE4 5BX(GB)**

(54) **Blow mould cooling.**

(57) A glassware forming apparatus including at least a pair of split blow moulds (14, 16). Means (28) is provided for spraying cooling fluid on to the outside of each mould valve. Control means (30) is operable to cause fluid to be sprayed during the period the moulds are open and to cause the spraying to be stopped when the moulds are closed.

Fig. 1

EP 0 121 346 A1

Croydon Printing Company Ltd

# BLOW MOLD COOLING

## BACKGROUND OF THE INVENTION

This invention relates generally to improved blow mold cooling. More particularly, this invention relates to improved blow mold cooling for use with the blow mold of a glassware forming machine of the press and blow type which is a single table, continuous rotary motion machine having a plurality of individual forming units mounted for rotation about the axis of the machine. This type of machine is shown in U.S. Patent No. 1,978,211 which issued on October 30, 1934 to G. E. Rowe. Machines of this type are commonly used in the glass industry today and are known as the "Emhart H-28 Machine." The type of machine shown in the 1,978,211 patent is a single gob machine. That is, at each forming unit, only one piece of ware, is produced during a single cycle of each forming unit.

An improved version of this machine is disclosed in U.S. Patent No. 4,339,264 issued to Francis A. Dahms on July 13, 1982 which patent is hereby incorporated by reference in this disclosure in its entirety. This type of machine shown in the patent is a double gob machine. That is, it forms two articles of ware during one cycle of each given forming unit.

In the apparatus shown in the 4,339,264 patent, blow mold cooling is accomplished by the lubricant, usually water, being sprayed on the interior of the molds by the spray nozzles which are mounted on the blank mold holder arm during the time the blank mold holder arm is in its up position. However, the

0121346

- 2 -

blank mold holder arm is in the up position only during a relatively short period of time in the cycle of the machine. Accordingly, the blow mold can only be sprayed during a short period of time in the cycle. This results in inefficient cooling which may effect the process operation of the machine.

## SUMMARY OF THE INVENTION

In view of the above, it is an object of the present invention to provide improved blow mold cooling.

More specifically, it is an object of this invention to provide more efficient blow mold cooling.

These and other objects of the invention may be realized through the provision of a blow mold holder for holding at least a pair of split blow mold halves. The blow mold holder is movable between an open position wherein the mold halves are apart and a closed position wherein the mold halves are closed. Means for cooling the blow molds during the period the blow mold holder is in the open position is provided and includes a spray nozzle associated with each of the split mold halves. Each nozzle is directed to spray fluid on the outside of the mold halves when the mold halves are open. Means are also provided for controlling the flow of fluid to the nozzles so that fluid flows to the nozzles when the mold holder is open and flow to the nozzles is stopped when the mold holder is closed.

## BRIEF DESCRIPTION OF THE DRAWINGS

Figure 1. is a top plan view of the blow mold and blank molds with the improved cooling system and its control system shown schematically.

Figure 2 is a side view, partially in section, of a blow mold half and cooling spray nozzle.

## DESCRIPTION OF THE PREFERRED EMBODIMENT

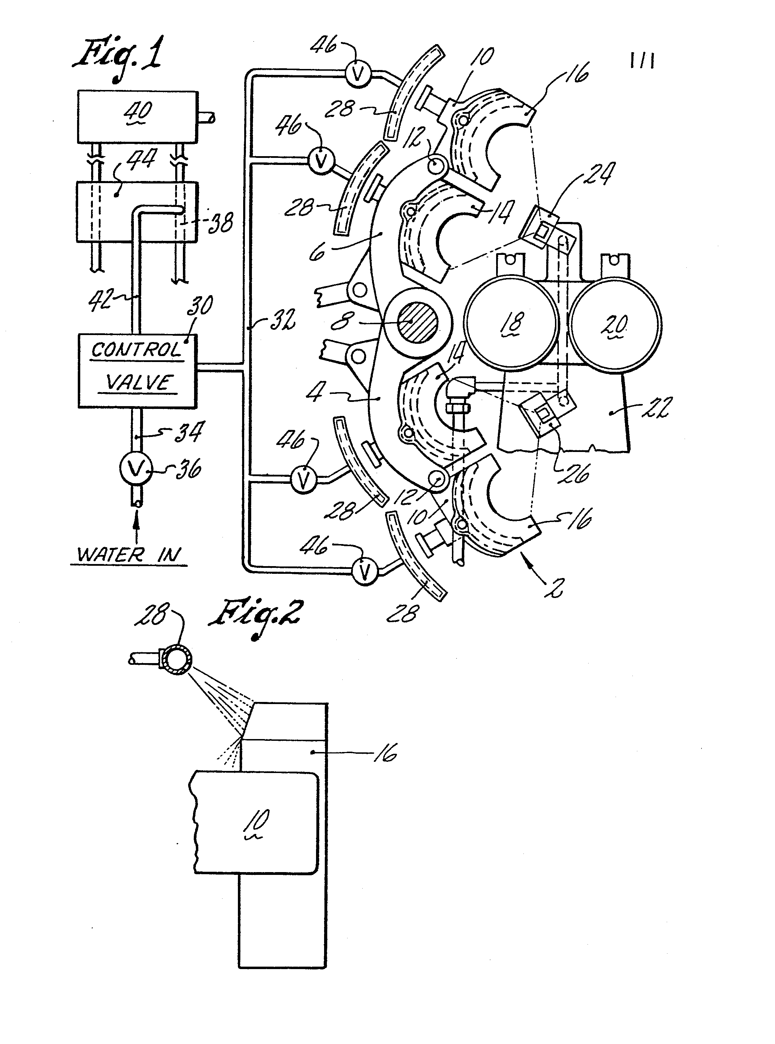

Referring to the drawings, Figure 1 shows a blow mold 2 in its open position. The structure and operation of the blow mold is described in U.S. Patent 4,339,264. Generally, the blow mold 2 includes a pair of mold holder arms 4 and 6, which are pivotable about a rod member 8. A mold holder 10 is pivotably attached to each mold holder arm 4 and 8 by means of pivot pins 12. Each mold holder 10 has an attachment mechanism for suitably holding two split mold halves 14 and 16.

The blank molds 18 and 20 are shown in their up position mounted on the blank mold holder arm 22. Two blow mold spray nozzles 24 and 26 are mounted on the blank mold holder arm 22, one for each set of blow mold halves.

A plurality of water cooling nozzles 28 are provided, one for each of the split mold halves 14 and 16. Each of the cooling spray nozzles 28 comprise an arcuate closed ended tube having holes drilled therein and are mounted by brackets on the neck ring support (not shown) in a proper location to spray water on the outside of its respective mold half as shown in Figure 2. In the preferred embodiment there are five holes in each tube with the two outer holes being positioned 30° from the horizontal and the three inner holes being positioned 40° from the horizontal.

All of the cooling spray nozzles 28 are connected to a single control valve 30 by suitable piping 32. Water or other cooling fluid is provided to the control valve 30 by means of a intake line 34. A master on/off valve 36 is provided in intake line 34. The control valve 30 is a type which is spring actuated on and pilot actuated off by pilot air or other fluid. Pilot air for operation of the control valve is provided by using the air in line 38 which actuates the bottom plate cylinder 40 to force the bottom plate down. The operation of the bottom plate is described in U.S. Patent 4,339,264. In practice, it has been found convenient to connect the pilot air line 42 to a tap in the connecting block 44 which serves to connect air from a bottom plate control valve to the bottom plate cylinder 40.

In operation, with the blow mold closed, the bottom plate is up and there is no air in line 38. Accordingly, the control valve 30 is spring biased closed and no fluid flows to the nozzles 28. When the blow mold open and the bottom plates move down, pilot air flows through line 42 to the control valve 30, causing the control valve 38 to open, and permitting water to flow to the nozzles 28. A manual control valve 46 is provided in each of the intake lines to the nozzles 28 to adjust the flow to each nozzle.

The blow mold sprays 24 and 26 are actuated as described in U.S. Patent No. 4,339,264 and serve to spray the inside of the molds when the blank molds are in their up position.

With this arrangement, the nozzles 28 serve to direct cooling fluid to the split blow mold halves 14 and 16 when the blow mold is open. This takes place during the period extending from slightly before the section passes the takeout where articles are removed from the neck ring to a point slightly after the gob has been pressed into a parison or preform. The blank mold holders are only in their upper position during the pressing operation which is the time that nozzles 24 and 26 direct water onto the interior of the mold halves 14 and 16. Accordingly, the nozzles 28 serve to direct fluid to the split mold halves during a longer period of time during the cycle then do the nozzles 24 and 26.

While reference has been made above to a specific embodiment, it will be apparent to those skilled in the art that various modifications and alterations may be made thereto without departing from the spirit of the present invention. Therefore, it is intended that the scope of this invention be ascertained by reference to the following claims.

WHAT IS CLAIMED IS:

1. In a glassware forming apparatus, a blow mold holder for holding at least one pair of opposed split mold halves, said blow mold holder being movable between an open position wherein the mold halves are apart and a closed position wherein the mold halves are closed, means for cooling said blow mold halves during the period the blow mold holder is in the open position, said means including a spray nozzle associated with each of the mold halves and directed to spray cooling fluid on the outside of its respective mold half, when said mold holder is in its open position, and means for controlling the flow of cooling fluid to said nozzles so that fluid flows to the nozzles when the mold holder is open and flow to the nozzles is stopped when the mold holder is closed.

2. The apparatus of Claim 1 wherein there are a plurality of sets of opposed split mold halves.

3. The apparatus of Claim 1 further including a control valve associated with each nozzle to control the flow of cooling fluid through the nozzle.

4. The apparatus of Claim 1 wherein said means for controlling the flow of fluid includes a control valve and means for actuating the control valve to its off position when said blow mold holder opens.

5. The apparatus of Claim 4 wherein said control valve is pilot operated off and said means for actuating said control valve to its off position includes pilot air from the air line which causes the bottom plate to move to its down position.

**Fig.1**

40

44

38

42

30

**CONTROL**
**VALUE**

34

36

V

WATER IN

46

V

28

46

V

28

6

8

4

46

V

28

46

V

28

10

12

14

16

24

18

20

22

26

10

16

2

**Fig.2**

28

16

10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | FR-A-2 488 594 (EMHART INDUSTRIES INC.) * Figure 9; page 33, lines 26-38; page 34, lines 1-3 * & US-A-4 339 264 (Cat. D, A) | 1 | C 03 B    9/38 C 03 B    9/40 C 03 B    40/02 |
| A | DE-B-1 934 072 (PRODUCTION SPECIALTIES CO.) * Claims 1, 5 * | 1,2 | |
| A | EP-A-0 035 145 (H. HEYE) * Claim 1; figures 8, 13; page 13, lines 13-24; page 14, lines 1-5; page 18, lines 18-23 * | 1,2 | |
| A | EP-A-0 043 261 (GRAPHOIDAL DEVELOPMENTS LTD.) * Claims 1, 9; figure 2 * | 1 | |
| A | US-A-3 350 190 (T.F. PIEL) * Claims 1, 4 * | 1 | **TECHNICAL FIELDS SEARCHED (Int. Cl. ³)** C 03 B    9/38 C 03 B    9/40 C 03 B    40/02 |
| A | US-A-2 964 879 (W.R. GIBSON) * Claims 1, 2 * | 1 | |

The present search report has been drawn up for all claims

| Place of search BERLIN | Date of completion of the search 25-05-1984 | Examiner STROUD J.G. |
|---|---|---|